# EUROPÄISCHE PATENTSCHRIFT

(11) **EP 2 924 829 B1**
(45) Veröffentlichungstag und Bekanntmachung des Hinweises auf die Patenterteilung: **24.06.2020**
(21) Anmeldenummer: 15151403.1
(22) Anmeldetag: 16.01.2015
(51) Int. Cl.: H02G 3/14

(54) **Schutzabdeckvorrichtung für Installationsgeräte**
Protective cover device for installation devices
Dispositif de recouvrement de protection pour appareils d'installation

(30) Priorität: 26.03.2014 DE 202014002621 U
(43) Veröffentlichungstag der Anmeldung: 30.09.2015
(73) Patentinhaber: ABB Schweiz AG, 5400 Baden (CH)
(72) Erfinder: Schulte, Jörg, 58513 Lüdenscheid (DE)
(74) Vertreter: Marks, Frank

(56) Entgegenhaltungen:
- DE-U1-202007 002 545
- US-A- 5 285 014
- US-A- 5 526 952
- US-B1- 6 703 562
- US-B1- 7 276 663

## Beschreibung

Die Erfindung betrifft eine mechanische und elektrische Schutzabdeckvorrichtung für elektrische Installationsgeräte, wie beispielsweise Schalter und Steckdosen, vor eindringender Feuchtigkeit, Farbe und Verschmutzungen nach dem Oberbegriff des Anspruches 1. Die Erfindung kann zur Abdeckung Unterputzeinsätzen von Installationsgeräten der Hausinstallationstechnik, insbesondere von Schaltern, Steckdosen und sonstigen Unterputz- Geräteeinsätzen, bei Renovierungsarbeiten eingesetzt werden.

Um Steckdosen und Schalter während der Renovierungsarbeiten zu schützen werden nach dem Entfernen der Rahmen die Steckdosen und Schalter beispielsweise mittels selbstklebenden PVC- Malerabdeckungen geschützt, die auf das jeweilige Installationsgerät anstelle des Rahmens aufgeklebt werden. Diese Malerabdeckungen sind jedoch nur einmal verwendbar, da die auf der Abdeckung befindliche Klebefolie, mit der die Abdeckungen befestigt werden, nach dem Entfernen der Abdeckung eine Wiederverwendung verhindert.

Zum Schutz vor Verschmutzung eines bereits installierten Unterputz- Busankopplers bis zur Montage des Busendgerätes ist die Malerabdeckung UP 196 der Firma Siemens bekannt, welche auf das Unterteil des Busankopplers aufgesteckt wird. Die Malerabdeckung UP 196 ist nicht dafür vorgesehen, auch den Tragring des Busankopplers zu bedecken, so dass dieser entweder zuvor entfernt oder zusätzlich abgeklebt werden muss.

Auch sind Schmutzabdeckungen der Firma Merten zum Schutz von Schaltern und Steckdosen vor Beschädigungen durch Maler und Lakierarbeiten bekannt (siehe Merten, Katalog 2014, Lösungen für intelligente Gebäude, Seite 325). Diese Schutzabdeckungen lassen sich jedoch vor einer Wiederverwendung nur schwer von Verschmutzungen, beispielsweise einer aufgetragenen Wandfarbe, reinigen.

Weiterhin kann diese Ausführungsform der Schmutzabdeckung bei Renovierungsarbeiten nicht gleichzeitig für Schalter und Steckdosen verwendet werden.

Die bekannten Putzschutzhauben der Firma Merten (siehe Merten, Katalog 2014, Lösungen für intelligente Gebäude, Seite 186) werden zum Schutz von Raumtemperaturreglern und Raumbediengeräten vor Verunreinigung durch Maler- und Lackierarbeiten eingesetzt, wobei jedoch bei aufgesetzter Putzschutzhaube die Temperaturmessung der Raumtemperaturregler eingeschränkt ist. Da die Putzschutzhaben üblicherweise auf die Geräte aufgeklebt werden, gestaltet sich auch hier deren Entfernung und eine Wiederverwendung als schwierig. Die US 7 276 663 B1 offenbart eine Schutzabdeckvorrichtung aus dem Stand der Technik mit einem Abdeckteil und Halteelementen sowie einer Federanordnung.

Alle vorab beschriebenen Abdeckungen zum Schutz von Elektroinstallationsgeräten sind für eine Doppelnutzung, beispielsweise für Schalter und Steckdose, nicht einsetzbar.

Der Erfindung liegt demgemäß die Aufgabe zugrunde, eine Abdeckvorrichtung für elektrische Installationsgeräte, wie beispielsweise Schalter und Steckdosen zum Schutz vor eindringender Feuchtigkeit, Farbe und Verschmutzungen, insbesondere bei Renovierungsarbeiten, bereitzustellen, wodurch vorgenannte Nachteile des Standes der Technik überwunden werden. Die erfindungsgemäße Schutzabdeckvorrichtung soll insbesondere universell für Schalter und Steckdosen verwendbar sein und vor einer Wiederverwendung leicht zu reinigen sein.

Diese Aufgabe wird erfindungsgemäß durch eine flüssigkeits- bzw. staubdichte Schutzabdeckvorrichtung für elektrische Installationsgeräte mit den Merkmalen des Schutzanspruches 1 gelöst.

Vorteilhafte Ausgestaltungen, Verbesserungen der erfindungsgemäßen Schutzabdeckvorrichtung sind in weiteren Ansprüchen und in der Beschreibung angegeben.

Die erfindungsgemäße Schutzabdeckvorrichtung für elektrische Installationsgeräte, wie Schalter und Steckdosen, zum Schutz vor eindringender Feuchtigkeit, Farbe und/oder Verschmutzungen, ist aus einem rechteckförmigen Abdeckteil und Halteelementen gebildet, wobei das Abdeckteil so ausgestaltet ist, dass es nach dem Einstecken in einen Unterputzeinsatz des Installationsgerätes mittels der vorgesehenen Halteelemente den Unterputzeinsatz und dessen Tragrahmen abdeckt. Erfindungsgemäß sind die Halteelemente auf Vorderseite und Rückseite des Abdeckteiles angeordnet und aus wenigstens einer Aufnahmevorrichtung oder Vertiefung gebildet, die dafür vorgesehen ist, Federelemente des Unterputzeinsatzes aufzunehmen, um so eine lösbare Verbindung der Schutzabdeckung mit dem Unterputzeinsatz zu schaffen.

Die Vorderseite der Schutzabdeckvorrichtung ist mit Ausnehmungen ausgestattet, welche nach dem Aufsetzen des Abdeckteiles auf ein als Schalter ausgeführtes Installationsgerät dessen Unterputzeinsatz einschließlich Tragrahmen flüssigkeits- und schmutzdicht abdecken. Weiterhin ist die Rückseite mit weiteren Ausnehmungen ausgestattet, welche nach dem Aufsetzen des Abdeckteiles auf ein als Steckdose ausgeführtes Installationsgerät dessen Unterputzeinsatz einschließlich Tragrahmen flüssigkeits- und schmutzdicht abdecken.

Mit der erfindungsgemäßen Schutzabdeckvorrichtung, nachfolgend auch Malerabdeckung genannt, werden in vorteilhafter Weise die bei Renovierungsarbeiten zu schützenden Unterputzeinsätze und Tragrahmen der Steckdosen und Schalter, zu denen auch Ausschalter, Wechselschalter, Kreuzschalter, Dimmer und Auskontrollerschalter gehören, vor Verunreinigungen in einfacher Weise geschützt, da die Malerabdeckung die jeweiligen Tragrahmen vollständig abdeckt und so eine Reinigung der Tragrahmen überflüssig wird.

Die Ausnehmungen im Abdeckteil sind in einer vorteilhaften Ausgestaltung so gestaltet, dass insbesondere die Erdbügel von Schutzkontaktsteckdosen mit abgedeckt und damit vor eindringender Feuchtigkeit geschützt sind.

Die Vorteile der erfindungsgemäßen Malerabdeckung ergeben sich insbesondere daraus, dass diese von der einen Seite für eine Abdeckung eines Schalters und von der anderen Seite für eine Abdeckung einer Steckdose verwendbar ist, so dass der am häufigsten zum Einsatz kommende Anwendungsfall der Abdeckung von Installationsgeräten Renovierungsarbeiten mit nur einer Ausführungsform der Malerabdeckung abdeckbar ist.

Dabei erweist es sich als besonders vorteilhaft, dass die äußeren Abmessungen der erfindungsgemäßen Schutzabdeckvorrichtung der Grundfläche des Tragrahmens eines, beispielsweise als Schalter oder Steckdose ausgeführten Installationsgerätes entsprechen. Bei beiden Verwendungsarten wird der Tragrahmen durch die Malerabdeckung komplett bedeckt und der Schutz des Tragrahmens ist gewährleistet. Weiterhin entfällt eine aufwendige Reinigung des Tragrahmens nach Abschluss der Renovierungsarbeiten.

Erfindungsgemäß sind das Abdeckteil und die Halteelemente als einstückiges flexibles Kunststoffteil ausgebildet. Das flexible Material der Malerabdeckung gestattet ein leichtes Entfernen angetrockneten Farbreste, da die Malerabdeckung in verschiedene Richtungen bewegt bzw. verbogen werden kann.

In einer vorteilhaften Ausgestaltung ist die Vorder- und Rückseite der Schutzabdeckvorrichtung mit einer Nanobeschichtung versehen.

Die Nano-Beschichtung erleichtert das Entfernen der Farbreste zusätzlich und sorgt dafür, dass weniger bis gar keine Farbe an der erfindungsgemäßen Malerabdeckung haften bleibt.

Damit die Malerabdeckung bündig mit dem Tragrahmen abschließt und der gewünschte Schutzeffekt in jedem Fall hergestellt werden kann, befinden sich auf der Seite der Abdeckung, welche den Tragrahmen und den Unterputzeinsatz eines Schalters schützen soll, Vertiefungen oder Aussparungen. Die Vertiefungen oder Aussparungen bieten beispielsweise Platz für Schraubköpfe der Geräteschrauben des Unterputzgehäuses, welche über den Tragrahmen hinausragen. Weiterhin können die vorgesehenen Vertiefungen oder Aussparungen genutzt werden, um damit die Unterputzeinsätze anstelle einer Spreize zu befestigen. Die Vertiefungen sind konstruktiv nur einseitig nötig, weil von der gegenüberliegenden Seite, welche auf eine Steckdose aufsteckbar ist, bereits genügend Raum unter der Malerabdeckung für über den Tragrahmen herausragende mechanische Teile, wie beispielsweise Schraubköpfe von Geräteschrauben des Unterputzeinsatzes, vorhanden ist.

Da für die Anbringung der Malerabdeckung auf den Tragrahmen des Unterputzeinsatzes keine Klebestreifen nötig sind, ergibt sich einerseits der Vorteil, dass die Montage der Abdeckung sehr schnell erfolgt, da die Malerabdeckung nur aufzustecken ist. Ebenso schnell erfolgt die Demontage, da die Malerabdeckung einfach abgezogen wird und eben keine Klebereste auf dem Tragrahmen oder an anderen Stellen verbleiben. Andererseits wird auch keine Zeit für das Entfernen einer eventuell vorhandenen Schutzfolie auf dem Klebestreifen benötigt, wie dies bei einigen bisher eingesetzten Malerabdeckungen der Fall ist.

Die vorab genannte Aufgabe wird weiterhin durch eine flüssigkeits- bzw. staubdichte Schutzabdeckvorrichtung für elektrische Installationsgeräte, insbesondere Schaltereinsätze mit einem herausragendem Dom für einen Drehknopf, mit den Merkmalen des Schutzanspruches 7 gelöst. Diese Universalabdeckung ist eine Ergänzung zur Malerabdeckung für Lichtschalter und Steckdosen, die für alle anderen Einsätze nutzbar und über Klebeelemente, wie Klebestreifen oder Klebefolie befestigt wird. Die Montage über Klebeelemente erscheint aufgrund geringen Prozentsatzes von anderen Einsätzen vertretbar, zumal die Universalabdeckung keine Einschränkung gegenüber irgendwelchen anderen Einsätzen in der Schalterkombination mit sich bringt. Die Aufbauhöhe der Universalabdeckung lässt alle bekannten Unterputzeinsätze und ihre zugehörigen Tragrahmen damit abdecken. Die Universalabdeckung besitzt ebenfalls Vertiefungen, um die Schraubenköpfte von aus dem Tragrahmen herausragenden mechanischen Teilen, wie beispielsweise der Schraubköpfe von Geräteschrauben aufzunehmen.

Anhand der in den folgenden Figuren dargestellten Ausführungsbeispiele sollen vorteilhafte Ausgestaltungen, Verbesserungen und weitere Vorteile der Erfindung näher erläutert und beschrieben werden.

Es zeigen:
- Figur 1: eine Sicht auf die Vorder- und Rückseite einer Schutzabdeckvorrichtung erster Ausführungsform, und
- Figur 2: eine zweite Ausführungsform der Schutzabdeckvorrichtung. Ausführungsform.

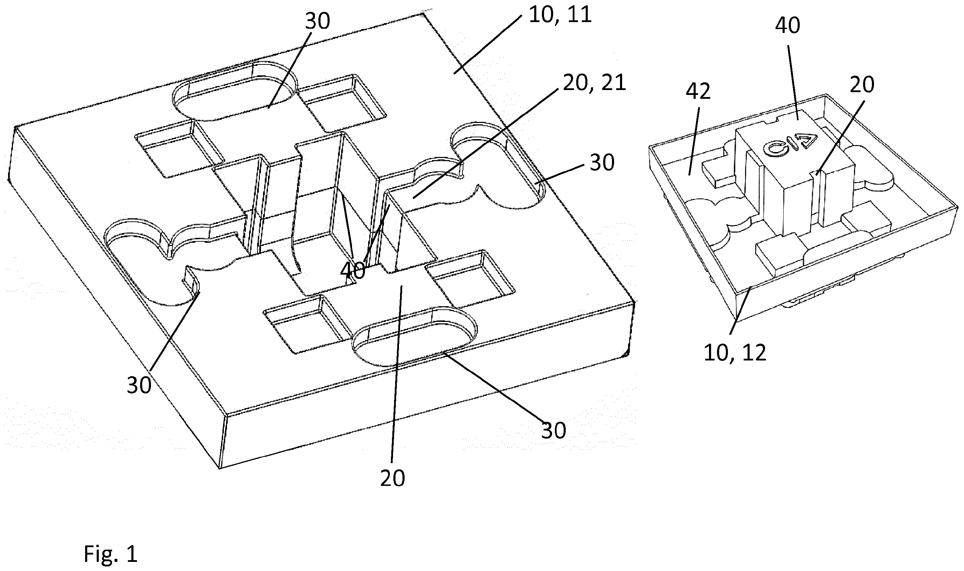

**Fig.** 1 zeigt eine erste beispielhafte Ausführungsform der Vorderseite 11 und Rückseite 12 der erfindungsgemäßen Schutzabdeckvorrichtung für Schalter und Steckdosen.

Die erfindungsgemäße Schutzabdeckvorrichtung ist aus einem rechteckförmigen aus flexiblem Kunststoffteil gebildetem der Fläche des auf dem Unterputzeinsatzes befindlichen Tragrahmens angepasstem Abdeckteil 10 und Halteelementen 20 aufgebaut. Das Abdeckteil 10 ist so ausgeführt, dass es nach dem Einstecken in einen Unterputzeinsatz des Installationsgerätes mittels der vorgesehenen Halteelemente 20 den Unterputzeinsatz und dessen Tragrahmen abdeckt. Die Halteelemente 20 befinden sich auf der Vorderseite 11 und der Rückseite 12 des Abdeckteiles 10.

Vorzugsweise sind die Halteelemente 20 aus wenigstens einer Vertiefung 21 gebildet, die dafür vorgesehen ist, Federelemente des Unterputzeinsatzes aufzunehmen, um so eine lösbare Verbindung der Schutzabdeckung mit dem Unterputzeinsatz zu schaffen.

Im mittleren Bereich der Vorderseite 11 ist eine aus der Unterseite 12 ragende rechteckförmige Ausnehmung 40 eingeformt, die zur Aufnahme von Schaltelementen eines Schalters vorgesehen ist, so dass nach dem Aufsetzen des Abdeckteiles 10 auf ein als Schalter ausgeführtes Installationsgerät dessen Unterputzeinsatz einschließlich Tragrahmen flüssigkeits- und schmutzdicht abgedeckt ist.

Die Rückseite 12 zeigt die herausragende rechteckförmige Ausnehmung 40 der Vorderseite 11, welche nach dem Aufsetzen der Rückseite 12 der Schutzabdeckvorrichtung auf den Tragrahmen des Unterputzeinsatzes einer Steckdose, insbesondere deren spannungsführenden Teile und Erdbügel, in vorteilhafter Weise abdeckt. Weiterhin ist die Rückseite 12 mit weiteren Ausnehmungen 42 ausgestattet, welche nach dem Aufsetzen des Abdeckteiles 10 auf das als Steckdose ausgeführte Installationsgerät in den Unterputzeinsatz einschließlich Tragrahmen lösbar eingreifen und diesen so flüssigkeits- und schmutzdicht abdecken.

Erfindungsgemäß sind im seitlichen Bereich der Vorderseite 11 Vertiefungen oder Aussparungen 30 angeordnet, welche mechanische Teile, wie beispielsweise Schraubköpfe von Geräteschrauben, die aus dem Tragrahmen des Unterputzeinsatzes herausragen, aufnehmen können.

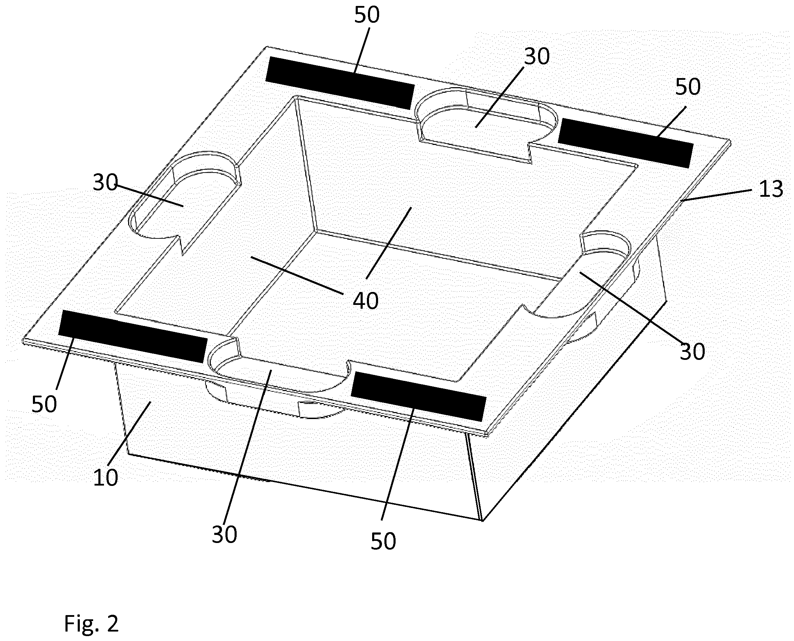

**Fig. 2** zeigt eine zweite beispielhafte universell anwendbare Ausführungsform der erfindungsgemäßen Schutzabdeckvorrichtung, welche insbesondere für den Unterputzeinsatz eines Schalters mit Drehknopf geeignet ist und ebenfalls aus einem flexiblen Kunststoffmaterial mit einer auf den Rahmen 13 aufgebrachten Nanobeschichtung versehen ist.

Die gezeigte Schutzabdeckvorrichtung besteht aus einem rechteckförmigen Abdeckteil 10 mit einer mittig angeordneten rechteckförmigen Ausnehmung 40 und einem umlaufendem äußeren Rahmen 13, wobei das Abdeckteil 10 so ausgestaltet ist, dass es nach dem Aufsetzen auf einen Unterputzeinsatz des Installationsgerätes den Unterputzeinsatz und dessen Tragrahmen vollständig umschließt. Der äußere rechteckförmige Rahmen 13 des Abdeckteiles 10 weist Vertiefungen oder Aussparungen 30 für mechanische Teile, wie beispielsweise Schraubköpfe von Geräteschrauben des Unterputzeinsatzes, welche über den Tragrahmen hinausragen, auf.

Wenigstens zwei sich gegenüberliegenden Seiten des äußeren rechteckförmigen Rahmens 13 sind mit Klebefolie oder Klebestreifen 50 versehen, mit denen der äußere rechteckförmigen Rahmen 13 auf dem Tragrahmen des Unterputzeinsatzes befestigbar ist.

In der mittig angeordneten Ausnehmung 40 des Abdeckteiles 10 kann in vorteilhafter Weise beispielsweise ein aus dem Tragrahmen herausragender Dom für einen Drehknopf eines Dimmeraufsatzes vollständig aufgenommen werden.

## Patentansprüche

1. Schutzabdeckvorrichtung für elektrische Installationsgeräte, wie Schalter und Steckdosen, zum Schutz vor eindringender Feuchtigkeit, Farbe und/oder Verschmutzungen, bestehend aus einem rechteckförmigen Abdeckteil (10) und Halteelementen (20), wobei das Abdeckteil (10) so ausgestaltet ist, dass es nach dem Einstecken in einen Unterputzeinsatz des Installationsgerätes mittels vorgesehener Halteelemente (20) den Unterputzeinsatz und dessen Tragrahmen abdeckt, wobei die Halteelemente (20) auf Vorderseite (11) und Rückseite (12) des Abdeckteiles (10) angeordnet sind, die Halteelemente (20) aus wenigstens einer Aufnahmevorrichtung oder Vertiefung (21) gebildet sind, die dafür vorgesehen ist, Federelemente des Unterputzeinsatzes aufzunehmen, um so eine lösbare Verbindung der Schutzabdeckung mit dem Unterputzeinsatz zu schaffen, im mittleren Bereich der Vorderseite (11) eine aus der Rückseite (12) ragende rechteckförmige Ausnehmung (40) eingeformt ist, welche nach dem Aufsetzen des Abdeckteiles (10) auf ein als Schalter ausgeführtes Installationsgerät dessen Unterputzeinsatz einschließlich Tragrahmen flüssigkeits- und schmutzdicht abdecken und die Rückseite (12) mit weiteren Ausnehmungen (42) ausgestattet ist, welche nach dem Aufsetzen des Abdeckteiles (10) auf ein als Steckdose ausgeführtes Installationsgerät in den Unterputzeinsatz Tragrahmen einschließlich Tragrahmen lösbar eingreifen und diesen so flüssigkeits- und schmutzdicht abdecken.

2. Schutzabdeckvorrichtung nach Anspruch 1, **dadurch gekennzeichnet, dass** das Abdeckteil (10) und die Halteelemente (20) als einstückiges flexibles Kunststoffteil ausgebildet sind.

3. Schutzabdeckvorrichtung nach einem der vorstehenden Ansprüche, **dadurch gekennzeichnet, dass** die Vorder- und Rückseite (11), (12) des Abdeckteiles (10) mit einer Nanobeschichtung versehen sind.

4. Schutzabdeckvorrichtung nach einem der vorstehenden Ansprüche, **dadurch gekennzeichnet, dass** im seitlichen Bereich der Vorderseite (11) oder der Rückseite (12) Vertiefungen oder Aussparungen (30) vorgesehen sind, welche mechanische Teile, wie beispielsweise Schraubköpfe von Geräteschrauben, des Unterputzeinsatzes aufnehmen.

5. Schutzabdeckvorrichtung nach einem der vorstehenden Ansprüche, **dadurch gekennzeichnet, dass** die Ausnehmungen (40) im Abdeckteil (10) so gestaltet sind, dass die Erdbügel von Schutzkontaktsteckdosen mit abgedeckt und damit vor eindringender Feuchtigkeit geschützt sind.

6. Schutzabdeckvorrichtung nach Anspruch 1, wobei das rechteckförmige Abdeckteil (10) mit einer mittig angeordneten rechteckförmigen Ausnehmung (40) und einem umlaufendem äußeren Rahmen (13) besteht, **dadurch gekennzeichnet, dass** der äußere rechteckförmige Rahmen (13) des Abdeckteiles (10) Vertiefungen oder Aussparungen (30) für mechanische Teile, wie beispielsweise Schraubköpfe von Geräteschrauben des Unterputzeinsatzes, aufweist.

7. Schutzabdeckvorrichtung nach Anspruch 6, **dadurch gekennzeichnet, dass** die Abdeckvorrichtung aus einem flexibles Kunststoffmaterial mit einer auf dem Rahmen 13 aufgebrachten Nanobeschichtung ausgeführt ist.

8. Schutzabdeckvorrichtung nach Anspruch 6 oder 7, **dadurch gekennzeichnet, dass** wenigstens zwei gegenüberliegenden Seiten des äußere rechteckförmigen Rahmens (13) mit Klebefolie oder Klebestreifen (50) versehen sind, mit denen der äußere rechteckförmigen Rahmen (13) auf dem Tragrahmen des Unterputzeinsatzes befestigbar ist.

9. Schutzabdeckvorrichtung nach Anspruch 6 bis 8, **dadurch gekennzeichnet, dass** die mittig angeordneten Ausnehmung (40) des Abdeckteiles (10) den herausragendem Dom für einen Drehknopf eines Schaltgerätes, beispielsweise eines Dimmeraufsatzes, aufnimmt.

## Claims

1. Protective covering device for electrical installation units, such as switches and plug sockets, for protection against penetrating moisture, paint and/or dirt, consisting of a rectangular covering part (10) and holding elements (20), wherein the covering part (10) is formed such that, after insertion into a flush-mounted insert of the installation unit, by means of holding elements (20) provided, it covers the flush-mounted insert and the support frame of the latter, wherein the holding elements (20) are arranged on the front side (11) and the rear side (12) of the covering part (10), the holding elements (20) are formed from at least one receiving device or depression (21) which is provided for receiving spring elements of the flush-mounted insert so as to create in this way a releasable connection of the protective covering to the flush-mounted insert, a rectangular recess (40) projecting from the rear side (12) is formed in the central region of the front side (11) and, after the covering part (10) is mounted on an installation unit in the form of a switch, covers the flush-mounted insert, including the support frame, of said switch in a liquid- and dirt-tight manner, and the rear side (12) is provided with further recesses (42), which, after the covering part (10) is mounted on an installation unit in the form of a plug socket, engage into the flush-mounted insert support frame, including support frame, in a releasable manner and in this way cover it in a liquid- and dirt-tight manner.

2. Protective covering device according to Claim 1, **characterised in that** the covering part (10) and the holding elements (20) are formed as an integral flexible plastic part.

3. Protective covering device according to either of the preceding claims, **characterized in that** the front and rear sides (11), (12) of the covering part (10) are provided with a nanocoating.

4. Protective covering device according to one of the preceding claims, **characterized in that** depressions or cutouts (30) are provided in the lateral region of the front side (11) or of the rear side (12) and receive mechanical parts, such as for example screw heads of unit screws of the flush-mounted insert.

5. Protective covering device according to one of the preceding claims, **characterized in that** the recesses (40) in the covering part (10) are shaped such that the earth clips of protective contact plug sockets are also covered and are thus protected against penetrating moisture.

6. Protective covering device according to Claim 1, wherein the rectangular covering part (10) consists of a centrally arranged rectangular recess (40) and a peripheral outer frame (13), **characterized in that** the outer rectangular frame (13) of the covering part (10) has depressions or cutouts (30) for mechanical parts, such as for example screw heads of unit screws of the flush-mounted insert.

7. Protective covering device according to Claim 6, **characterized in that** the covering device is formed from a flexible plastic material, with a nanocoating applied to the frame 13.

8. Protective covering device according to Claim 6 or 7, **characterized in that** at least two opposite sides of the outer rectangular frame (13) are provided with adhesive film or adhesive strips (50), by way of which the outer rectangular frame (13) is able to be fastened to the support frame of the flush-mounted insert.

9. Protective covering device according to Claims 6 to 8, **characterized in that** the centrally arranged recess (40) of the covering part (10) receives the projecting dome for a rotary knob of a switch unit, for example of a dimmer attachment.

## Revendications

1. Dispositif de recouvrement de protection pour appareils d'installation électriques, tels que des commutateurs et des prises, pour la protection contre l'humidité pénétrante, la peinture et/ou les salissures, constitué par une partie de recouvrement rectangulaire (10) et des éléments de retenue (20), la partie de recouvrement (10) étant configurée de telle sorte qu'après l'insertion dans un insert encastré de l'appareil d'installation au moyen d'éléments de retenue (20) prévus, elle recouvre l'insert encastré et son cadre porteur, les éléments de retenue (20) étant agencés sur le côté avant (11) et le côté arrière (12) de la partie de recouvrement (10), les éléments de retenue (20) étant formés par au moins un dispositif de réception ou un creux (21), qui est prévu pour recevoir des éléments de ressort de l'insert encastré, afin de créer ainsi une liaison amovible du recouvrement de protection avec l'insert encastré, une cavité rectangulaire (40) dépassant du côté arrière (12) étant formée dans la zone centrale du côté avant (11), qui, après la pose de la partie de recouvrement (10) sur un appareil d'installation configuré sous la forme d'un commutateur, recouvre d'une manière étanche aux liquides et aux salissures son insert encastré, y compris le cadre porteur, et le côté arrière (12) étant équipé de cavités (42) supplémentaires, qui, après la pose de la partie de recouvrement (10) sur un appareil d'installation configuré sous la forme d'une prise, entrent en prise de manière amovible dans l'insert encastré cadre porteur, y compris le cadre porteur, et recouvrent ainsi ceux-ci d'une manière étanche aux liquides et aux salissures.

2. Dispositif de recouvrement de protection selon la revendication 1, **caractérisé en ce que** la partie de recouvrement (10) et les éléments de retenue (20) sont configurés sous la forme d'une partie en matière plastique flexible d'un seul tenant.

3. Dispositif de recouvrement de protection selon l'une quelconque des revendications précédentes, **caractérisé en ce que** le côté avant et le côté arrière (11), (12) de la partie de recouvrement (10) sont munis d'un nano-revêtement.

4. Dispositif de recouvrement de protection selon l'une quelconque des revendications précédentes, **caractérisé en ce que** des creux ou des évidements (30) sont prévus dans la zone latérale du côté avant (11) ou du côté arrière (12), qui reçoivent des parties mécaniques, telles que par exemple des têtes de vis de vis d'appareil, de l'insert encastré.

5. Dispositif de recouvrement de protection selon l'une quelconque des revendications précédentes, **caractérisé en ce que** les cavités (40) dans la partie de recouvrement (10) sont configurées de telle sorte que les équerres de mise à la terre de prises de sécurité soient recouvertes et ainsi protégées de l'humidité pénétrante.

6. Dispositif de recouvrement de protection selon la revendication 1, dans lequel la partie de recouvrement rectangulaire (10) est constituée par une cavité rectangulaire (40) agencée au milieu et un cadre extérieur circonférentiel (13), **caractérisé en ce que** le cadre rectangulaire extérieur (13) de la partie de recouvrement (10) comprend des creux ou des évidements (30) pour des parties mécaniques, telles que par exemple des têtes de vis de vis d'appareil de l'insert encastré.

7. Dispositif de recouvrement de protection selon la revendication 6, **caractérisé en ce que** le dispositif de recouvrement est configuré sous la forme d'un matériau plastique flexible avec un nano-revêtement appliqué sur le cadre (13).

8. Dispositif de recouvrement de protection selon la revendication 6 ou 7, **caractérisé en ce qu'**au moins deux côtés opposés du cadre rectangulaire extérieur (13) sont munis d'un film adhésif ou d'une bande adhésive (50), avec lequel ou avec laquelle le cadre rectangulaire extérieur (13) peut être fixé sur le cadre porteur de l'insert encastré.

9. Dispositif de recouvrement de protection selon les revendications 6 à 8, **caractérisé en ce que** la cavité (40) agencée au milieu de la partie de recouvrement (10) reçoit le dôme dépassant pour un bouton rotatif d'un appareil de commutation, par exemple d'un accessoire variateur.
